# DEMANDE DE BREVET EUROPEEN

(11) **EP 0 782 238 A1**
(43) Date de publication de la demande: **02.07.1997**
(21) Numéro de dépôt: 96402867.4
(22) Date de dépôt: 23.12.1996
(51) Int. Cl.: H02K 1/17

(54) **Moteur à aimants permanents avec agrafes de blocage**

(30) Priorité: 27.12.1995 FR 9515553
(71) Demandeur: VALEO SYSTEMES D'ESSUYAGE, 78321 La Verrière (FR)
(72) Inventeur: Vacca, Frédéric, 78910 Behoust (FR)
(74) Mandataire: Le Forestier, Eric

(57) **Abrégé**

Le moteur comporte une carcasse (4) présentant une face interne cylindrique (12), des aimants permanents (28) s'étendant contre la face interne de la carcasse, et des agrafes (38) comportant chacune un corps disposé entre les aimants respectifs et deux pattes (48) s'étendant en regard d'une face d'extrémité (34) des aimants suivant la direction axiale en étant adjacentes à cette face. Le moteur comporte en outre un flasque (6) fixé à la carcasse en regard de cette face d'extrémité des aimants. Les agrafes et le flasque sont agencés de sorte qu'une partie du flasque s'étend en regard des agrafes suivant la direction axiale en étant adjacente aux agrafes.

Application notamment pour les ventilateurs de véhicule automobile.

## Description

L'invention concerne les moteurs à aimants permanents et, en particulier les moteurs de ventilateur de véhicule automobile.

Le document EP-A-0 154 335 décrit un moteur comportant une carcasse présentant une face interne cylindrique, quatre aimants permanents s'étendant contre la face cylindrique de la carcasse, et quatre agrafes à profil transversal en 'U' disposées entre les aimants pour préserver leur écartement mutuel. Chaque agrafe est fixée à la carcasse par emboutissage local de la paroi de la carcasse à travers des évidements du corps de l'agrafe. L'agrafe présente quatre pattes repliées sur les deux faces d'extrémité des deux aimants adjacents pour les retenir à l'encontre de leur déplacement axial dans les deux sens.

Si un moteur de ce type entraînait en rotation un ventilateur de véhicule automobile avec l'axe du moteur parallèle à la direction de déplacement du véhicule, les agrafes devraient retenir les aimants à l'encontre de leur déplacement axial dans le sens correspondant à une décélération brutale du véhicule (par exemple lors d'un choc frontal). Or, pour réaliser un emboutissage de qualité assurant une bonne fixation de l'agrafe, il est préférable que la paroi de la carcasse présente une épaisseur importante. Cet agencement n'est donc pas adapté lorsque, a contrario, on souhaite réaliser un moteur dont la carcasse présente une paroi de faible épaisseur en vue de réduire le poids et le prix de revient du moteur.

Un but de l'invention est de pallier cet inconvénient en fournissant un moteur dans lequel les agrafes retiennent efficacement les aimants dans un sens suivant la direction axiale et dans lequel la carcasse peut avoir une paroi peu épaisse.

En vue de la réalisation de ce but, on prévoit selon l'invention un moteur à aimants permanents comportant une carcasse présentant une face interne cylindrique, des aimants permanents s'étendant contre la face interne de la carcasse, et des agrafes comportant chacune un corps disposé entre les aimants respectifs et deux pattes s'étendant en regard d'une face d'extrémité des aimants suivant la direction axiale en étant adjacentes à cette face, dans lequel le moteur comporte en outre un flasque fixé à la carcasse en regard de cette face d'extrémité des aimants, les agrafes et le flasque étant agencés de sorte qu'une partie du flasque s'étend en regard des agrafes suivant la direction axiale en étant adjacente aux agrafes.

En cas de choc axial tendant à déplacer les aimants en direction du flasque, chaque agrafe, si celle-ci ne l'est pas déjà, vient en butée sur la partie précitée du flasque adjacente suivant la direction axiale et est ainsi immobilisée. On peut donc s'abstenir de fixer l'agrafe à la paroi de la carcasse et ainsi donner à cette paroi une faible épaisseur.

D'autres caractéristiques et avantages de l'invention apparaîtront encore à la lecture de la description qui va suivre d'un mode préféré de réalisation donné à titre d'exemple non limitatif. Aux dessins annexés :
- la figures 1 est une vue en coupe axiale d'un moteur selon l'invention ;
- la figure 2 est une vue en perspective du flasque du moteur de la figure 1 ;
- la figure 3 est une vue en perspective de la carcasse et des aimants du moteur de la figure 1 ;
- la figure 4 est une vue en perspective d'une agrafe du moteur de la figure 1 ; et
- la figure 5 est une vue axiale partielle d'une agrafe et d'un tronçon de couronne du flasque montrant leur disposition relative.

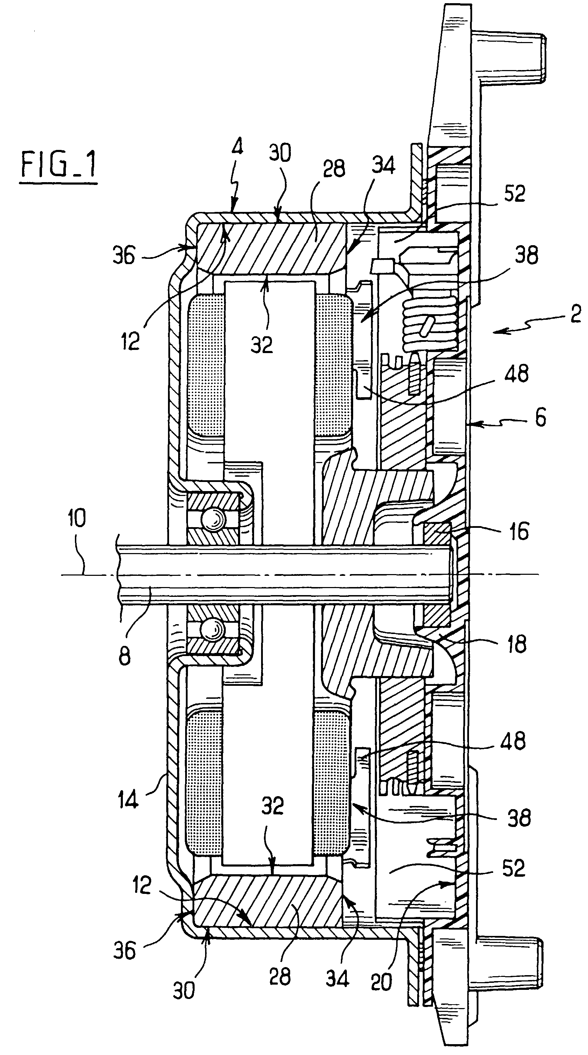

En référence aux figures 1, 2 et 3, le moteur 2 est un moteur à courant continu de ventilateur de véhicule automobile.

Il comporte un carter constitué d'une carcasse 4 et d'un flasque 6 en matière plastique fixé à la carcasse, et un arbre 8 d'axe 10. La carcasse comprend une paroi cylindrique d'axe 10 présentant une face interne 12 cylindrique, et un fond 14 obturant la carcasse à une extrémité de la paroi cylindrique. Le flasque a une forme générale de disque et obture la carcasse à son autre extrémité, le flasque étant opposé au fond 14 suivant la direction axiale. L'arbre 8 traverse un orifice central du fond 14. Une extrémité de l'arbre est engagée dans une bague 16 reçue dans un logement cylindrique défini par un palier 18 s'étendant en saillie d'une face interne 20 du flasque. Un bord circulaire du flasque est fixé à un bord circulaire de la carcasse, ces deux bords étant orthogonaux à l'axe 10. Pour cela, le bord du flasque présente des ergots 22 venant en prise avec des orifices 24 du bord de la carcasse, et des languettes élastiques 26 tendant à repousser la carcasse pour rattraper le jeu généré par les ergots. Le flasque porte quatre balais sur sa face interne 20, destinés à être en contact avec un collecteur monté sur l'arbre.

Le moteur comporte quatre aimants permanents ou ferrites 28. Chaque aimant présente une face externe convexe 30 et une face interne concave 32, toutes deux en forme de tronçon de cylindre et concentriques d'axe 10. Il présente également deux faces d'extrémité 34, 36 planes, parallèles et opposées l'une à l'autre, et perpendiculaires à l'axe 10. Les aimants 28 sont disposés dans la carcasse les uns à côté des autres avec leurs faces d'extrémités coplanaires. La face externe 30 des aimants s'étend contre la face interne 12 de la carcasse en réalisant un contact surface contre surface avec celle-ci.

La face d'extrémité 36 des aimants s'étend contre le fond 14 de la carcasse. Le flasque s'étend en regard de la face d'extrémité 34 des aimants suivant la direction axiale.

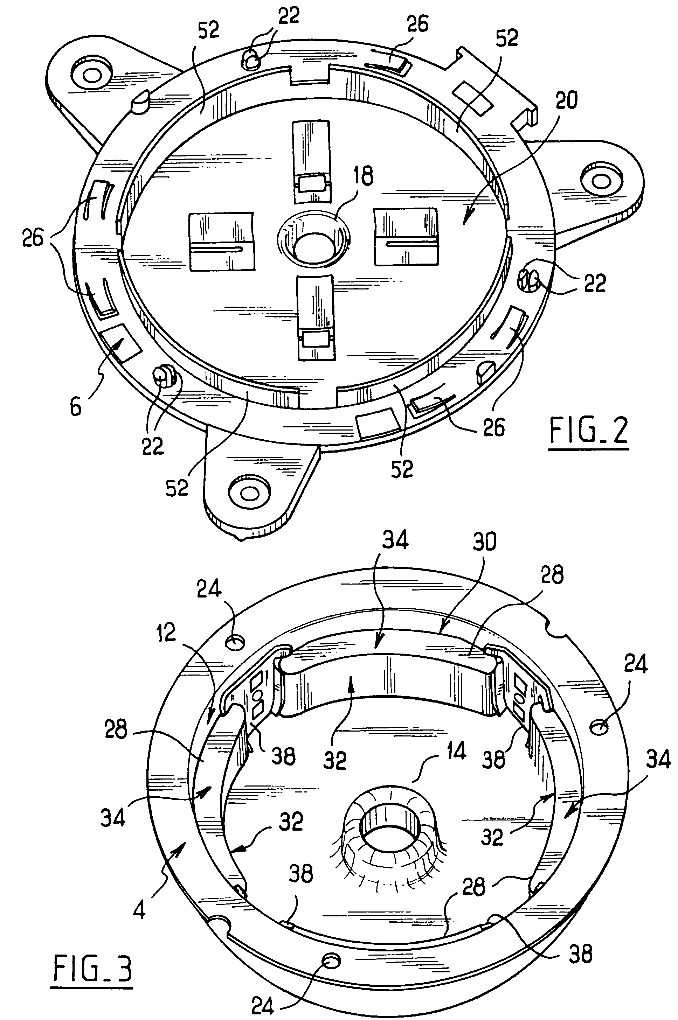

En référence aux figures 3, 4 et 5, le moteur comporte quatre agrafes 38 disposées respectivement entre les aimants 28. Les agrafes sont réalisées par découpe et mise en forme d'une tôle d'acier. Chaque agrafe comporte un corps 40 de forme générale rectangulaire présentant trois évidements, et deux joues 42 repliées pour s'étendre en saillie du corps à des bords latéraux de celui-ci, en regard l'une de l'autre.Chaque agrafe est disposée entre deux aimants avec le corps 40 contre la face interne cylindrique 12 de la carcasse et les joues 42 contre les aimants, en appui contre ceux-ci. Chaque joue 42 comporte à son bord libre une crête 44 recourbée vers l'extérieur de l'agrafe en direction de l'aimant en contact avec cette joue, la crête étant adjacente à la face interne 32 de l'aimant. La joue épouse ainsi la forme de l'aimant et interdit son déplacement suivant la direction radiale.

Le corps 40 présente une extrémité 46 s'étendant en saillie des aimants suivant la direction axiale. L'agrafe comporte deux pattes 48 s'étendant de part et d'autre de cette extrémité, latéralement dans le prolongement de cette extrémité. Ces deux pattes sont repliées du même côté du corps que les joues, vers l'intérieur du moteur de sorte que les pattes s'étendent en regard de la face d'extrémité 34 des aimants suivant la direction axiale en étant adjacentes à cette face. Le corps 40 présente deux nervures longitudinales 50 s'étendant parallèlement aux joues jusqu'à l'extrémité 46 en donnant à celle-ci un profil légèrement ondulé.

A une extrémité 51 du corps opposé à l'extrémité 46, les joues 42 sont rapprochées l'une de l'autre et le corps est rétréci entre les joues. Cette forme facilite l'introduction de l'agrafe entre les aimants suivant un mouvement parallèle à la direction axiale.

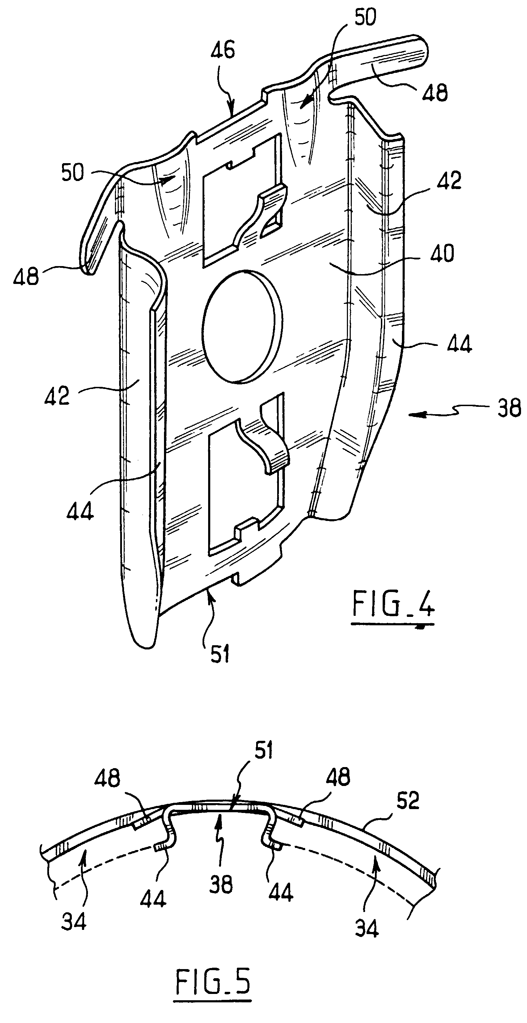

En références aux figures 1 et 2, le flasque 6 présente quatre tronçons 52 de couronne cylindrique venus de moulage et formant une couronne incomplète d'axe 10. Ces tronçons 52 s'étendent en saillie de la face interne 20 du flasque. Ils se trouvent en regard de la face d'extrémité 34 des aimants et en regard du corps 40 et des pattes 48 des agrafes respectives suivant la direction axiale. Les tronçons sont adjacents aux agrafes. La figure 5 montre l'alignement suivant la direction axiale d'une agrafe 38 avec le tronçon de couronne associé 52, ainsi que l'alignement suivant la direction axiale des faces d'extrémité 34 des aimants, représentés en traits pointillés, avec les pattes 48 de l'agrafe. En référence à la figure 1, l'extrémité 46 du corps de chaque agrafe s'étend à quelques dixièmes de millimètre suivant la direction axiale du sommet du tronçon de couronne associé.

Il est envisageable de dimensionner les différents éléments du moteur de sorte que l'extrémité 46 de l'agrafe soit en contact avec le sommet du tronçon de couronne. Cependant, comme le montre le présent exemple, il est avantageux de ménager un court espace suivant la direction axiale entre l'extrémité 46 de l'agrafe et le sommet du tronçon, ce pour augmenter les tolérances de fabrication des éléments du moteur et faciliter leur montage.

Le moteur est monté dans le véhicule avec l'axe 10 parallèle à la direction de déplacement du véhicule et le flasque 6 vers l'avant du véhicule. Lors d'une décélération brutale du véhicule, les aimants tendent à se déplacer axialement en direction du flasque 6. Les aimants viennent donc en appui sur les pattes 48 des agrafes suivant la direction axiale, et l'extrémité 46 et les pattes 48 des agrafes viennent en appui sur les sommets des tronçons de couronne adjacents suivant la direction axiale. Le profil ondulé de l'extrémité 46 augmente la largeur de cet appui. Les aimants 28 sont ainsi immobilisés axialement en direction du flasque. En direction du fond 14, les aimants 28 sont également bloqués puisqu'ils sont en appui sur le fond de la carcasse. On réalise ainsi le blocage axial des aimants dans les deux sens sans qu'il soit nécessaire de fixer les agrafes à la carcasse.

Bien entendu, on pourra apporter à l'invention de nombreuses modifications sans sortir du cadre de celle-ci. La partie du flasque en regard et adjacente aux agrafes est ici constituée de quatre tronçons de couronne, mais on pourra modifier la configuration de cette partie.

## Revendications

1. Moteur à aimants permanents comportant une carcasse présentant une face interne cylindrique(12), des aimants permanents (28) s'étendant contre la face interne de la carcasse, et des agrafes (38) comportant chacune un corps disposé entre les aimants respectifs et deux pattes (48) s'étendant en regard d'une face d'extrémité (34) des aimants suivant la direction axiale en étant adjacentes à cette face, caractérisé en ce que le moteur comporte en outre un flasque (6) fixé à la carcasse en regard de cette face d'extrémité des aimants, les agrafes et le flasque étant agencés de sorte qu'une partie du flasque s'étend en regard des agrafes suivant la direction axiale en étant adjacente aux agrafes.

2. Moteur à aimants permanents selon la revendication 1, caractérisé en ce que le flasque (6) présente des tronçons (52) de couronne cylindrique, ces tronçons étant coaxiaux à la carcasse et s'étendant en saillie du flasque en regard des agrafes (38) suivant la direction axiale en étant adjacents aux agrafes.

3. Moteur à aimants permanents selon la revendication 1 ou 2, caractérisé en ce que la carcasse comporte un fond (14) opposé au flasque (6) suivant la direction axiale, les aimants (28) étant en butée contre le fond de la carcasse.

4. Moteur à aimants permanents selon l'une des revendications 1 à 3, caractérisé en ce qu'il s'agit d'un moteur de ventilateur de véhicule automobile.
